# FASCICULE DE BREVET EUROPEEN

(11) **EP 0 797 913 B1**
(45) Date de publication et mention de la délivrance du brevet: **27.06.2001**
(21) Numéro de dépôt: 97440025.1
(22) Date de dépôt: 18.03.1997
(51) Int. Cl.: A01D 78/10

(54) **Machine de fenaison**
Heuwerbungsmaschine
Haymaking machine

(30) Priorité: 29.03.1996 FR 9604143
(43) Date de publication de la demande: 01.10.1997
(73) Titulaire: KUHN S.A., 67700 Saverne (FR)
(72) Inventeur: Aron, Jérôme, 67330 Dossenheim sur Zinsel (FR)
(74) Mandataire: Andres, Jean-Claude

(56) Documents cités:
- EP-A- 0 083 460
- EP-A- 0 310 532
- EP-A- 0 381 970
- EP-A- 0 391 093
- EP-A- 0 407 757
- EP-A- 0 454 602
- EP-A- 0 507 408
- DE-A- 3 743 025
- DE-U- 8 709 233
- DE-U- 8 712 165

## Description

La présente invention se rapporte à une machine de fenaison comportant un châssis de forme allongée qui porte plusieurs rotors de fanage et/ou d'andainage munis d'outils de travail, lequel châssis est réalisé en une partie centrale et des parties latérales qui sont articulées sur la partie centrale au moyen de pivots autour desquels elles sont repliables vers le haut pour le transport et/ou la dépose, un dispositif de protection qui entoure au moins partiellement les rotors étant reliés audit châssis, lequel dispositif de protection comporte des éléments latéraux qui sont également repliables vers le haut pour le transport et/ou la dépose et qui peuvent être déplacés afin de réduire la hauteur de la machine dans cette position de transport et/ou de dépose.

Sur une machine connue de ce genre les éléments latéraux du dispositif de protection sont réalisés en deux parties. La partie extérieure de chaque élément latéral est articulée sur la partie qui est située à l'intérieur. Elle est en sus reliée par un levier de guidage à une extrémité d'un levier d'ajustement qui est articulé en son milieu sur le rotor extérieur de manière à être rotatif. Sur l'autre extrémité de ce levier d'ajustement est articulée une tige de commande qui est elle-même articulée sur le rotor voisin du rotor extérieur et qui est sollicitée par un ressort. Lorsque la partie latérale du châssis est déplacée vers le haut, ladite tige fait tourner le levier d'ajustement autour de son axe d'articulation. Ce levier d'ajustement tire alors sur le levier de guidage qui entraîne la partie extérieure de l'élément latéral du dispositif de protection. Cette partie extérieure pivote alors d'un angle d'environ 270° par rapport à la partie située à l'intérieur. Ainsi, elle est dirigée vers le bas dans la position de transport et/ou de dépose. Lors du retour dans la position de travail elle est de nouveau pivotée vers l'extérieur.

Ce mode de réalisation nécessite de nombreuses pièces et un grand nombre d'articulations. Il est relativement compliqué et demande un entretien méticuleux pour permettre un bon fonctionnement de toutes les articulations. En sus, celles-ci peuvent prendre du jeu et rendre le dispositif instable.

La présente invention a notamment pour but de remédier aux inconvénients précités de la machine connue. Elle doit proposer une machine de fenaison avec un dispositif de protection simple, robuste et dont la position est très facile à régler.

A cet effet une importante caractéristique de l'invention consiste en ce que chaque élément latéral du dispositif de protection comporte au moins un segment sensiblement rectiligne qui est guidé dans un palier qui est relié à la partie latérale correspondante du châssis, de manière à pouvoir s'y déplacer longitudinalement lors des déplacements en hauteur de ces parties latérales du châssis.

Les éléments latéraux du dispositif de protection peuvent ainsi être déplacés sur une trajectoire rectiligne par rapport aux parties latérales du châssis de sorte qu'ils s'étendent au-delà des outils des rotors dans la position de travail et qu'ils se situent en retrait par rapport auxdits outils dans la position de transport. Durant le travail, les éléments latéraux du dispositif de protection empêchent l'accès, au moins par l'avant, dans la trajectoire des outils des rotors extérieurs. On évite ainsi que ces outils entrent en collision avec des personnes, des animaux ou des obstacles qui pourraient se trouver sur la trajectoire de la machine.

Par contre, au transport, lesdits éléments latéraux n'ont pas de fonction de protection. Leurs extrémités extérieures se situent alors en retrait par rapport aux outils des rotors extérieurs, ce qui permet de diminuer la hauteur de la machine.

Le passage des éléments latéraux du dispositif de protection de l'une des positions décrites dans l'autre s'effectue par un simple déplacement longitudinal desdits éléments par rapport aux parties latérales du châssis. Ce mouvement est extrêmement simple à obtenir. De plus, les moyens à mettre en oeuvre sont également très simples.

L'invention concerne également les caractéristiques ci-après considérées isolément ou dans toutes leurs combinaisons techniquement possibles.

Chaque élément latéral du dispositif de protection est agencé de telle sorte qu'il se déplace automatiquement dans le ou les paliers qui sont reliés à la partie latérale correspondante du châssis lorsque cette dernière pivote autour de son pivot avec la partie centrale du châssis. Le positionnement des éléments latéraux du dispositif de protection s'effectue ainsi sans intervention de l'utilisateur. Cela garantit aussi le positionnement correct desdits éléments à la fois dans la position de travail et dans la position de transport.

Chaque élément latéral du dispositif de protection est articulé, au moyen d'au moins un axe dirigé dans la direction d'avancement, sur un support fixe. Ce support est lié à la partie centrale du châssis et s'étend transversalement au sens d'avancement. L'axe d'articulation de chaque élément latéral du dispositif de protection est décalé par rapport au pivot de la partie latérale correspondante du châssis de telle sorte qu'il exerce une traction sur ledit élément latéral lors du déplacement en position de transport et/ou de dépose. Cet axe d'articulation se situe, par rapport au milieu de la machine, au-delà d'un plan passant par la bissectrice de l'angle de pivotement de la partie latérale correspondante du châssis pour passer de la position de travail dans la position de transport ou vice versa.

D'autres caractéristiques et avantages de l'invention ressortiront de la description qui va suivre et qui se réfère aux dessins annexés qui représentent, à titre d'exemple non limitatif, une forme de réalisation de la machine selon l'invention.

Dans ces dessins :
- la figure 1 représente une vue arrière d'une machine selon l'invention en position de travail ;
- la figure 2 représente une vue de dessus de la machine selon la figure 1 ;
- la figure 3 représente une vue arrière de la machine en position de transport et/ou de dépose.

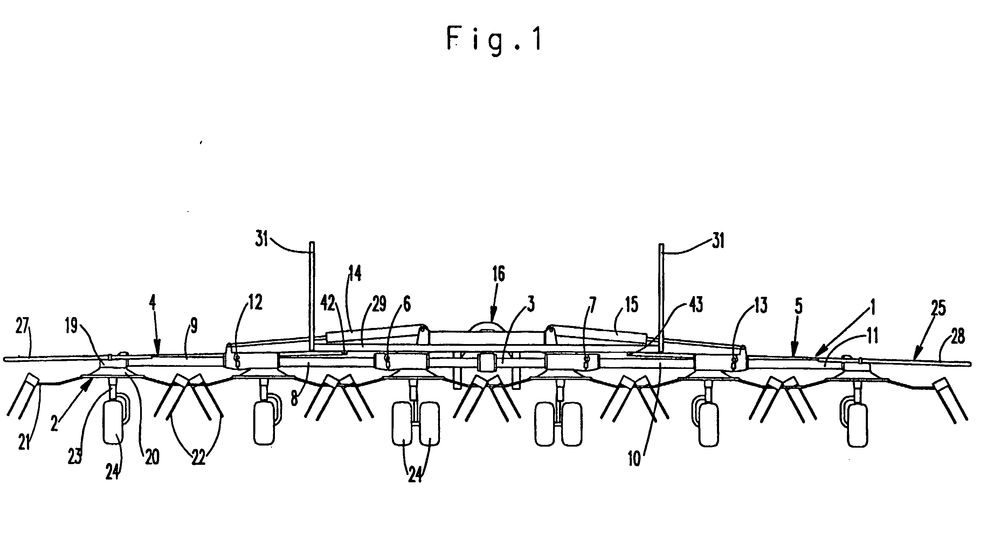

Tel que cela ressort des figures 1 à 3, la machine selon l'invention comporte un châssis (1) de forme allongée qui porte plusieurs rotors (2) de fanage et/ou d'andainage. Ledit châssis (1) se compose d'une partie centrale (3) et de deux parties latérales (4 et 5) qui sont articulées aux extrémités de la partie centrale (3) au moyen de pivots (6 et 7) dirigés dans la direction d'avancement indiquée par la flèche (A). Chacune de ces parties latérales (4 et 5) est réalisée en deux tronçons (8 et 9, 10 et 11) qui sont également articulés entre eux au moyen de pivots (12 et 13) dirigés dans la direction d'avancement (A). Chacune des parties latérales (4 et 5) est en sus reliée à la partie centrale (3) au moyen d'un vérin hydraulique (14, 15) qui permet de déplacer la partie latérale (4, 5) correspondante autour de son pivot (6, 7) avec la partie centrale (3). Cette dernière est munie d'un dispositif d'accrochage (16) à un tracteur qui n'est pas représenté et qui sert à animer la machine et à la déplacer dans la direction d'avancement (A). Ce dispositif (16) se compose d'une poutre (17) et d'une potence (18) avec trois points d'accouplement. Le dispositif d'accrochage (16) pourrait également être constitué par un timon dans le cas d'une machine du type traîné.

La partie centrale (3) du châssis (1) porte deux rotors (2) de fanage et chaque tronçon (8 à 11) des parties latérales (4 et 5) porte un rotor (2) de fanage. La machine représentée possède ainsi un total de six rotors (2). On comprendra que le nombre de rotors (2) peut varier en fonction du nombre de tronçons (8 à 11) que comportent les parties latérales (4 et 5) du châssis (1). Chacun de ces rotors (2) est associé à un carter (19) de la partie centrale (3) ou des tronçons (8 à 11) correspondants. Chaque rotor (2) possède un moyeu (20) qui est muni de plusieurs bras (21). Ceux-ci s'étendent radialement et portent des fourches de travail (22). Ledit moyeu (20) est monté de manière à pouvoir tourner sur un axe support (23) sensiblement vertical. En vue de l'entraînement en rotation des rotors (2), chaque moyeu (20) possède une couronne dentée qui engrène avec un pignon dans le carter (19) correspondant. Chacun de ces pignons est monté sur un arbre d'entraînement qui est logé dans la partie centrale (3) ou le tronçon (8 à 11) correspondant du châssis (1). Ces différents arbres d'entraînement sont reliés entre eux par des cardans ou des articulations à doigts situés au niveau des pivots (6, 7, 12 et 13). ils sont eux mêmes entraînés en rotation à partir de l'arbre de prise de force du tracteur au moyen d'un arbre d'entraînement intermédiaire.

Chaque axe support (23) d'un rotor (2) porte à son extrémité inférieure une ou deux roues porteuses (24) pouvant rouler sur le sol. Son extrémité supérieure est montée dans un palier du carter (19) correspondant

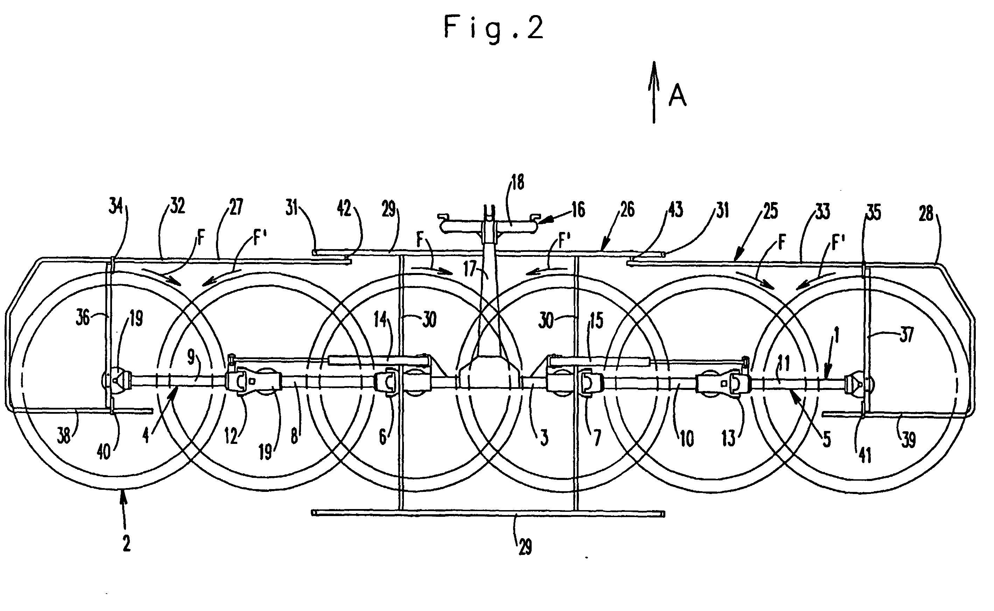

Le châssis (1) porte par ailleurs un dispositif de protection (25) qui s'étend sur le côté avant et au moins en partie sur les côtés latéraux des rotors (2) extérieurs (voir figure 2). Ce dispositif de protection (25) pourrait également entourer totalement les rotors (2) de la machine. Tel que représenté, le dispositif de protection (25) se compose d'un élément central (26) et de deux éléments latéraux (27 et 28). L'élément central (26) est formé par une tige (29) sensiblement parallèle à la partie centrale (3) du châssis (1). Elle se situe à l'avant des rotors (2) de cette partie centrale (3) et est fixée sur cette dernière au moyen de poutrelles (30). Sa longueur est telle qu'elle s'étend pratiquement sur toute la largeur des deux rotors (2) de la partie centrale (3) du châssis (1). Elle peut comporter à chacune de ses extrémités une barre sensiblement verticale (31) pour la protection lorsque la machine est en position de transport ou de dépose. L'élément central (26) peut comporter une deuxième tige (29) identique à celle précitée, située sur le côté arrière des rotors (2) de la partie centrale (3) du châssis (1).

Dans la position de travail, chaque élément latéral (27, 28) du dispositif de protection (25) s'étend à l'avant et en partie sur le côté extérieur des rotors (2) des deux tronçons (8 et 9 ou 10 et 11) de l'une des parties latérales (4 ou 5) du châssis (1). Pour le transport et/ou la dépose, chaque élément latéral (27, 28) est repliable vers le haut et déplaçable afin de réduire la hauteur de la machine dans cette position. Chacun de ces éléments latéraux (27, 28) est réalisé en une seule pièce ou en plusieurs pièces assemblées. Chacun comporte au moins un segment (32, 33) sensiblement rectiligne qui est guidé de manière à pouvoir se déplacer longitudinalement dans un palier (34, 35) situé sur le côté avant de la partie latérale (4, 5) correspondante. Ce palier (34, 35) possède un orifice pour le passage dudit segment (32, 33) et dont les dimensions sont légèrement supérieures à celles de ce dernier. Le palier (34, 35) du segment (32, 33) de chaque élément latéral (27, 28) est lié à un support (36, 37) qui est fixé sur le tronçon (9, 11) de la partie latérale (4 ou 5) correspondante du châssis (1).

Chaque élément latéral (27, 28) peut comporter un deuxième segment sensiblement rectiligne (38, 39) qui est également guidé dans un palier (40, 41) de manière à pouvoir se déplacer longitudinalement. Lesdits segments (32, 33 et 38, 39) sont sensiblement parallèles. Les seconds paliers (40, 41) se situent sur le côté arrière des tronçons (9, 11). Ils sont reliés à ces derniers par des prolongements dirigés vers l'arrière des supports (36 et 37).

En raison de leur liaison avec les tronçons (9, 11) des parties latérales (4, 5) du châssis (1), les éléments latéraux (27, 28) du dispositif de protection (25) se déplacent avec lesdites parties latérales (4, 5) lorsqu'elles sont transposées de la position de travail dans la position de transport et/ou de dépose et inversement. Dans la position relevée pour le transport et/ou la dépose, les éléments latéraux (27, 28) peuvent être déplacés vers le bas par coulissement des segments (32, 33, 38, 39) dans les paliers (34, 35, 40, 41), de manière à réduire la hauteur de la machine. Ce coulissement peut être effectué manuellement ou à l'aide de moyens de déplacement tels que des vérins.

Les éléments latéraux (27, 28) du dispositif de protection (25) peuvent être agencés de telle sorte que leurs segments (32, 33, 38, 39) se déplacent automatiquement dans les paliers (34, 35, 40, 41) lorsque les parties latérales (4, 5) correspondantes du châssis (1) se déplacent autour des pivots (6, 7) pour passer de la position de travail dans la position de transport et/ou de dépose et inversement. Dans ce cas, chaque élément latéral (27, 28) est articulé au moyen d'au moins un axe (42, 43) sur la tige (29) de l'élément central (26) qui constitue un support fixe. Ledit axe d'articulation (42, 43) est dirigé dans la direction d'avancement (A) et est sensiblement parallèle au pivot (6, 7) de la partie latérale (4, 5) correspondante du châssis (1).

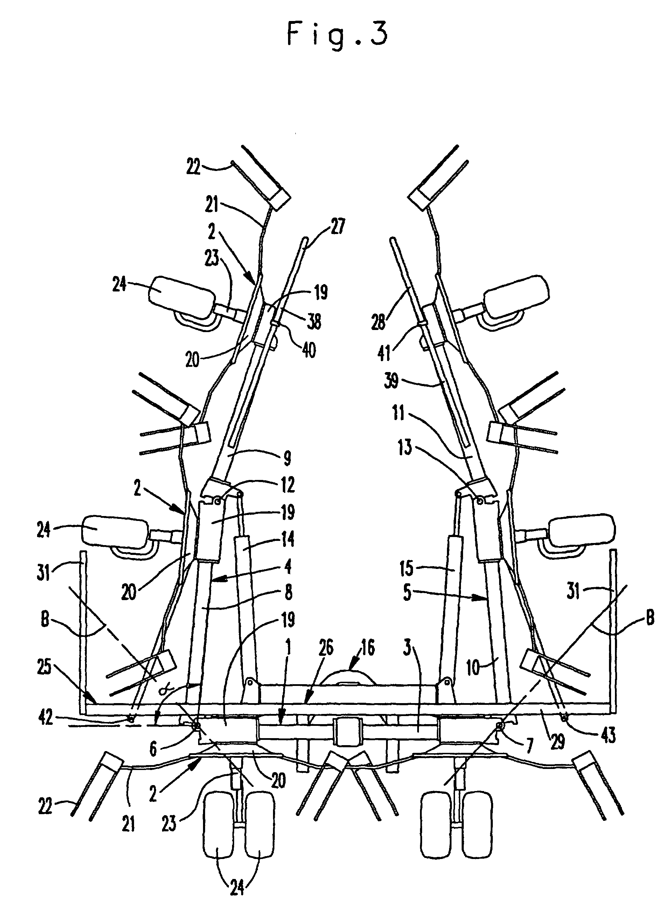

Il ressort notamment de la figure 3 que l'axe d'articulation (42, 43) de chaque élément latéral (27, 28) du dispositif de protection (25) est décalé par rapport au pivot (6, 7) de la partie latérale (4, 5) correspondante. Ce décalage est tel que ledit axe d'articulation (42, 43) exerce une traction sur l'élément latéral (27, 28) correspondant lorsque celui-ci est déplacé dans la position de transport et une pression lorsqu'il revient en position de travail. A cet effet, ledit axe d'articulation (42, 43) se situe, par rapport au milieu de la machine, au-delà d'un plan (B) passant par la bissectrice de l'angle de pivotement (α), autour du pivot (6, 7), de la partie latérale (4, 5) correspondante du châssis (1) pour passer d'une position dans l'autre.

Selon un autre exemple de réalisation qui n'est pas représenté, le deuxième segment (38, 39) de chaque élément latéral (27, 28) est prolongé vers le milieu de la machine. Il est alors articulé sur un second axe qui est aligné sur l'axe (42, 43). Ce second axe est disposé sur la deuxième tige (29) qui se situe sur le côté arrière de la partie centrale (3) du châssis (1). Ce mode de réalisation est plus robuste.

Durant le travail, la machine selon l'invention est accouplée à un tracteur qui permet de la déplacer dans la direction (A). Les roues (24) qui sont disposées sous les rotors (2) roulent sur le sol. Lesdits rotors (2) sont entraînés en rotation depuis le tracteur autour de leurs axes supports (23) respectifs, de telle sorte qu'ils tournent deux à deux en convergence à l'avant (flèche F et F'). Lors de cette rotation, leurs fourches (22) ramassent les végétaux qui se trouvent au sol, les déplacent vers l'arrière entre les rotors (2) convergents et les étalent à nouveau derrière la machine tout en provoquant leur retournement. Dans cette position, l'élément central (26) et les éléments latéraux (27 et 28) du dispositif de protection (25) s'étendent au-delà des fourches (22) et empêchent l'arrivée jusqu'aux rotors (2) de corps extérieurs qui pourraient être blessés et/ou pourraient occasionner des dégâts.

Pour mettre la machine dans la position de transport (voir figure 3), on commande les vérins hydrauliques (14 et 15) de telle sorte qu'ils se raccourcissent. ils tirent alors sur les parties latérales (4 et 5) du châssis (1) et les font tourner vers le haut, autour des pivots (6 et 7), d'un angle (α) d'environ 90° (figure 3). Lors de ce relevage, lesdites parties latérales (4 et 5) entraînent les éléments latéraux (27 et 28) du dispositif de protection (25). Ceux-ci pivotent alors vers le haut, au moyen de leurs axes (42 et 43) par rapport à l'élément central (26). Simultanément ces axes (42 et 43) retiennent, en raison de leur position décalée par rapport aux pivots (6 et 7), les éléments latéraux (27 et 28) vers le bas. Il se produit ainsi un coulissement des segments (32, 33 et 38, 39) de ces éléments latéraux (27 et 28) dans les paliers (34, 35 et 40, 41). En conséquence, dans la position de transport les extrémités supérieures de ces éléments latéraux (27 et 28) se situent en retrait par rapport aux fourches (22) des rotors (2) situés aux extrémités. La hauteur de la machine est ainsi réduite ce qui facilite le passage sous d'éventuels obstacles ainsi que le remisage dans un bâtiment. Cela permet aussi de rapprocher davantage les tronçons extérieurs (9 et 11) vers le milieu de la machine. Une réduction supplémentaire de la hauteur peut être obtenue en repliant les bras (21) qui sont dirigés vers le haut des deux rotors (2) extérieurs. En sus, ces éléments latéraux (27 et 28) améliorent la stabilité des parties latérales (4 et 5) du châssis (1) dans la position de transport.

Pour revenir dans la position de travail, les vérins hydrauliques (14 et 15) sont commandés pour qu'ils s'allongent. Les parties latérales (4 et 5) du châssis (1) reviennent alors dans la position horizontale. Elles entraînent simultanément les éléments latéraux (27 et 28) du dispositif de protection (25) vers le bas. Leurs segments sensiblement rectilignes (32, 33 et 38, 39) coulissent automatiquement vers l'extérieur dans les paliers (34, 35 et 40, 41) de telle sorte que les éléments latéraux (27 et 28) reprennent la position où ils assurent à nouveau une protection complète.

Il est bien évident que l'invention n'est pas limitée au mode de réalisation décrit et représenté sur les dessins annexés. Des modifications sont possibles, notamment en ce qui concerne la constitution des divers éléments ou par substitution d'équivalents techniques, sans sortir pour autant du domaine de protection.

## Revendications

1. Machine de fenaison comportant un châssis (1) de forme allongée qui porte plusieurs rotors de fanage et/ou d'andainage (2) munis d'outils de travail (22), lequel châssis (1) est réalisé en une partie centrale (3) et des parties latérales (4, 5) qui sont articulées sur la partie centrale (3) au moyen de pivots (6, 7) autour desquels elles sont repliables vers le haut pour le transport et/ou la dépose, un dispositif de protection (25) qui entoure au moins partiellement les rotors (2) étant relié audit châssis (1), lequel dispositif de protection (25) comporte des éléments latéraux (27, 28) qui sont également repliables vers le haut pour le transport et/ou la dépose et qui peuvent être déplacés afin de réduire la hauteur de la machine dans cette position de transport et/ou de dépose, ***caractérisée par le fait que*** chaque élément latéral (27, 28) du dispositif de protection (25) comporte au moins un segment (32, 33, 38, 39) sensiblement rectiligne qui est guidé dans un palier (34, 35, 40, 41) qui est relié à la partie latérale (4, 5) correspondante du châssis (1), de manière à pouvoir s'y déplacer longitudinalement lors des déplacements en hauteur de ces parties latérales (4 et 5) du châssis (1).

2. Machine selon la revendication 1, ***caractérisée par le fait que*** chaque élément latéral (27, 28) du dispositif de protection (25) comporte deux segments (32, 33 et 38, 39) qui sont guidés dans deux paliers (34, 35 et 40, 41) dont l'un est situé sur le côté avant et l'autre sur le côté arrière de la partie latérale correspondante (4, 5) du châssis (1).

3. Machine selon la revendication 1 ou 2, ***caractérisée par le fait que*** chaque élément latéral (27, 28) du dispositif de protection (25) est agencé de telle sorte que les segments sensiblement rectilignes (32, 33, 38, 39) se déplacent automatiquement dans le ou les paliers (34, 35, 40, 41) reliés à la partie latérale (4, 5) correspondante du châssis (1) lorsque celle-ci pivote autour de son pivot (6, 7) avec la partie centrale (3) du châssis (1).

4. Machine selon la revendication 3, ***caractérisée par le fait que*** chaque élément latéral (27, 28) du dispositif de protection (25) est articulé au moyen d'au moins un axe (42, 43) qui est dirigé dans la direction d'avancement (A) et qui est disposé sur un support fixe (29).

5. Machine selon la revendication 4, ***caractérisée par le fait que*** chaque élément latéral (27, 28) du dispositif de protection (25) est articulé sur le support fixe (29) à travers deux axes (42, 43) qui sont alignés l'un sur l'autre et qui se situent l'un sur le côté avant et l'autre sur le côté arrière du châssis (1).

6. Machine selon la revendication 4, ***caractérisée par le fait que*** l'axe d'articulation (42, 43) de chaque élément latéral (27, 28) du dispositif de protection (25) est décalé par rapport au pivot (6, 7) de la partie latérale (4, 5) correspondante du châssis (1) de telle sorte qu'il exerce une traction sur ledit élément latéral (27, 28) lors du déplacement en position de transport et/ou de dépose et une pression lors du déplacement en position de travail.

7. Machine selon la revendication 6, ***caractérisée par le fait*** ***que*** l'axe d'articulation (42, 43) de chaque élément latéral (27, 28) du dispositif de protection (25) se situe, par rapport au milieu de la machine, au-delà d'un plan (B) qui passe par la bissectrice de l'angle de pivotement (α) de la partie latérale (4, 5) correspondante du châssis (1) lors de la transposition de la position de travail dans la position de transport et/ou de dépose et inversement.

## Claims

1. Haymaking machine including a chassis (1) of elongate shape which carries several tedding and/or windrowing rotors (2) equipped with working tools (22), which chassis (1) is made as a central part (3) and lateral parts (4, 5) which are articulated to the central part (3) by means of pivots (6, 7) about which they can be folded upwards for transport and/or setting down, a protection device (25) which at least partially surrounds the rotors (2) being connected to the said chassis (1), which protection device (25) includes lateral elements (27, 28) which can also be folded upwards for transport and/or setting down and which can be moved so as to reduce the height of the machine in this transport and/or setting down position, ***characterized in*** that each lateral element (27, 28) of the protection device (25) includes at least one substantially straight section (32, 33, 38, 39) which is guided in a bearing (34, 35, 40, 41) which is connected to the corresponding lateral part (4, 5) of the chassis (1), in such a way that it can move longitudinally therein during the heightwise movements of these lateral parts (4 and 5) of the chassis (1).

2. Machine according to Claim 1, ***characterized in*** that each lateral element (27, 28) of the protection device (25) includes two sections (32, 33 and 38, 39) which are guided in two bearings (34, 35 and 40, 41) one of which is situated on the front side and the other on the rear side of the corresponding lateral part (4, 5) of the chassis (1).

3. Machine according to Claim 1 or 2, ***characterized in*** that each lateral element (27, 28) of the protection device (25) is arranged in such a way that the substantially straight sections (32, 33, 38, 39) move automatically in the bearing or bearings (34, 35, 40, 41) connected to the corresponding lateral part (4, 5) of the chassis (1) when this lateral part pivots about its pivot (6, 7) joining it with the central part (3) of the chassis (1).

4. Machine according to Claim 3, ***characterized in*** that each lateral element (27, 28) of the protection device (25) is articulated by means of at least one axis (42, 43) which points in the direction of forward travel (A) and which is arranged on a fixed support (29).

5. Machine according to Claim 4, ***characterized in*** that each lateral element (27, 28) of the protection device (25) is articulated to the fixed support (29) via two axes (42, 43) which are aligned with one another and which are situated one on the front side and the other on the rear side of the chassis (1).

6. Machine according to Claim 4, ***characterized in*** that the axis of articulation (42, 43) of each lateral element (27, 28) of the protection device (25) is offset with respect to the pivot (6, 7) of the corresponding lateral part (4, 5) of the chassis (1) in such a way that it exerts a pulling force on the said lateral element (27, 28) during the displacement into the transport and/or setting down position, and a pushing force during the displacement into the work position.

7. Machine according to Claim 6, ***characterized in*** that the axis of articulation (42, 43) of each lateral element (27, 28) of the protection device (25) is situated, with respect to the middle of the machine, beyond a plane (B) which passes through the bisector of the angle (α) through which the corresponding lateral part (4, 5) of the chassis (1) pivots when changing from the work position to the transport and/or setting down position and vice versa.

## Patentansprüche

1. Heuwerbungsmaschine mit einem Rahmen (1) länglicher Form, der mehrere mit Arbeitswerkzeugen (22) versehene Zett- und/oder Schwadrotoren (2) aufweist, wobei der Rahmen (1) aus einem mittleren Teil (3) und Seitenteilen (4, 5) besteht, die mittels Drehzapfen (6, 7), um die sie für den Transport und/oder das Absetzen nach oben klappbar sind, am mittleren Teil (3) angelenkt sind, wobei eine Schutzvorrichtung (25), die die Rotoren (2) zumindest teilweise umgibt, mit dem Rahmen (1) verbunden ist und Seitenelemente (27, 28) umfaßt, die für den Transport und/oder das Absetzen ebenfalls nach oben klappbar sind und zur Verringerung der Höhe der Maschine in dieser Transport- und/oder Absetzstellung verschoben werden können, ***dadurch gekennzeichnet,*** daß jedes Seitenelement (27, 28) der Schutzvorrichtung (25) mindestens ein im wesentlichen gerades Segment (32, 33, 38, 39) aufweist, das in einem mit dem entsprechenden Seitenteil (4, 5) des Rahmens (1) verbundenen Lager (34, 35, 40, 41) derart geführt wird, daß es sich dort bei Höhenverschiebungen dieser Seitenteile (4 und 5) des Rahmens (1) in Längsrichtung bewegen kann.

2. Maschine nach Anspruch 1, ***dadurch gekennzeichnet,*** daß jedes Seitenelement (27, 28) der Schutzvorrichtung (25) zwei Segmente (32, 33 und 38, 39) aufweist, die in zwei Lagern (34, 35 und 40, 41) geführt werden, von denen sich eines auf der Vorderseite und das andere auf der Hinterseite des entsprechenden Seitenteils (4, 5) des Rahmens (1) befindet.

3. Maschine nach Anspruch 1 oder 2, ***dadurch gekennzeichnet,*** daß jedes Seitenelement (27, 28) der Schutzvorrichtung (25) so angeordnet ist, daß sich die im wesentlichen geraden Segmente (32, 33, 38, 39) automatisch in dem oder den Lagern (34, 35, 40, 41) verschieben, die mit dem entsprechenden Seitenteil (4, 5) des Rahmens (1) verbunden sind, wenn dieser um seinen Drehzapfen (6, 7) mit dem mittleren Teil (3) des Rahmens (1) schwenkt.

4. Maschine nach Anspruch 3, ***dadurch gekennzeichnet,*** daß jedes Seitenelement (27, 28) der Schutzvorrichtung (25) mittels mindestens einer in Fahrtrichtung (A) ausgerichteten und an einer festen Stütze (29) angeordneten Achse (42, 43) angelenkt ist.

5. Maschine nach Anspruch 4, ***dadurch gekennzeichnet,*** daß jedes Seitenelement (27, 28) der Schutzvorrichtung (25) durch zwei aufeinander ausgerichtete Achsen (42, 43), von denen sich eine auf der Vorderseite und die andere auf der Hinterseite des Rahmens (1) befindet, an der festen Stütze (29) angelenkt ist.

6. Maschine nach Anspruch 4, ***dadurch gekennzeichnet,*** daß die Gelenkachse (42, 43) jedes Seitenelements (27, 28) der Schutzvorrichtung (25) bezüglich des Drehzapfens (6, 7) des entsprechenden Seitenteils (4, 5) des Rahmens (1) so versetzt ist, daß sie bei der Bewegung in Transport- und/oder Absetzstellung auf das Seitenelement (27, 28) eine Zugkraft und bei der Bewegung in Arbeitsstellung eine Druckkraft ausübt.

7. Maschine nach Anspruch 6, ***dadurch gekennzeichnet,*** daß sich die Gelenkachse (42, 43) jedes Seitenelements (27, 28) der Schutzvorrichtung (25) bezüglich der Mitte der Maschine jenseits einer Ebene (B) befindet, die durch die Halbierende des Schwenkwinkels (α) des entsprechenden Seitenteils (4, 5) des Rahmens (1) bei der Umstellung aus der Arbeitsstellung in die Transport- und/oder Absetzstellung und umgekehrt verläuft.
